(19) Europäisches Patentamt
European Patent Office
Office européen des brevets

(11) Veröffentlichungsnummer: **0 360 074 B1**

(12) **EUROPÄISCHE PATENTSCHRIFT**

(45) Veröffentlichungstag der Patentschrift: **16.03.94**

(51) Int. Cl.[5]: **C08F 279/04**, C08L 55/02, //(C08L51/06,27:06),(C08L51/06, 69:00)

(21) Anmeldenummer: **89116493.1**

(22) Anmeldetag: **07.09.89**

# (54) Zur Herstellung transparenter thermoplastischer Formmassen geeignete Pfropfpolymerisate.

(30) Priorität: **20.09.88 DE 3831853**

(43) Veröffentlichungstag der Anmeldung:
**28.03.90 Patentblatt 90/13**

(45) Bekanntmachung des Hinweises auf die Patenterteilung:
**16.03.94 Patentblatt 94/11**

(84) Benannte Vertragsstaaten:
**BE DE ES FR GB IT**

(56) Entgegenhaltungen:
**EP-A- 0 007 810** **EP-A- 0 221 456**
**FR-A- 2 008 612** **GB-A- 886 343**
**GB-A- 1 013 393** **US-A- 4 385 157**

(73) Patentinhaber: **BAYER AG**

**D-51368 Leverkusen(DE)**

(72) Erfinder: **Piejko, Karl-Erwin, Dr.**
**Unterscheider Weg 7a**
**D-5060 Bergisch- Gladbach 2(DE)**
Erfinder: **Lindner, Christian, Dr.**
**Riehlerstrasse 200**
**D-5000 Köln 60(DE)**
Erfinder: **Billinger, Otto, Dr.**
**Birkenstrasse 13**
**D-5460 Linz am Rhein(DE)**
Erfinder: **Westeppe, Uwe, Dr.**
**Vogelskamp 72**
**D-4020 Mettmann(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Transparente thermoplastische Formmassen aus Pfropfpolymerisaten harzbildender Monomere auf Kautschuke und Polyvinylchlorid sind bekannt. Geeignet sind z.B. Pfropfpolymerisate von Methylmethacrylat und Styrol auf Polybutadien, sogenannte MBS-Pfropfpolymerisate zur Verbesserung der Zähigkeit von Hart-Polyvinylchlorid. Transparente schlagzähe Formmassen dieser Art sind zur Herstellung von Flaschen, Profilen und Platten gebräuchlich.

Um Transparenz der Pfropfpolymerisate auch in Kombination mit Polyvinylchlorid-Matrizes zu erzielen, werden als deren Kautschukgrundlagen Copolymerisate aus Butadien und anderen Monomeren (häufig Styrol) verwendet, wobei Art und Menge des anderen Monomeren so gewählt sind, daß der Brechungsindex des Kautschuks mit dem des Polyvinylchlorids übereinstimmt. Als Pfropfmonomer wird auch Methylmethacrylat, gegebenenfalls kombiniert mit Styrol, eingesetzt. Dabei ist es für die Transparenz der Formmasse notwendig, daß entweder die Pfropfhülle vollständig mit Polyvinylchlorid mischbar ist (wie im Falle von Polymethylmethacrylat) oder durch Einbau von Styrol in die Pfropfhülle deren Brechungsindex dem von PVC angeglichen wird.

Bekannte Pfropfkautschuke mit der für die Transparenz notwendigen Zusammensetzung haben grundlegende Nachteile. So liegt die Glasübergangstemperatur (Erweichungstemperatur) der Kautschukgrundlage (aufgrund des einpolymerisierten Styrols) erheblich höher als die üblicher Polybutadienkautschuke. Deshalb besitzen diese Pfropfkautschuke die tiefen Temperaturen (<0 °C) nur geringe Zähigkeit. Pfropfpolymerisate mi Pfropfhüllen aus überwiegend Methylmethacrylat sind zwar dem Polyvinylchlorid angepaßt, für andere Thermoplaste jedoch aufgrund nicht ausreichender Verträglichkeit häufig nicht verwendbar.

Es besteht daher Bedarf an Pfropfkautschuken mit verbesserter Tieftemperaturzähigkeit, die transparente Mischungen mit Thermoplasten ergeben.

Gegenstand der Erfindung sind Pfropfpolymerisate aus
einem teilchenförmigen wenigstens partiell vernetzten Dienkautschuk (Pfropfgrundlage) und
einem in Gegenwart des Dienkautschuks polymerisierten Styrol/Acrylnitrilgemisch wobei

1. die mittleren Durchmesser ($d_{50}$-Werte) der Dienkautschukteilchen 50 bis 600 nm, bevorzugt 50 bis 400 nm, besonders bevorzugt 50 bis 200 nm und insbesondere 60 bis 100 nm betragen,
2. der Dienkautschuk Polybutadien ist, das bis zu 2 Gew.-% eines mehrfunktionellen vernetzenden Monomers einpolymerisiert enthalten kann,
3. das Styrol/Acrylnitrilgemisch 30 bis 0, bevorzugt 25 bis 0 und besonders bevorzugt 5 bis 15 Gew.-% Acrylnitril enthält,
4. die Pfropfausbeute der Pfropfpolymerisation mindestens 65 %, bevorzugt mindestens 75 % ist,
5. der Gesamtkautschukgehalt X des Pfropfpolymerisats in Gew.-% entspricht

$$X = \frac{A - a}{100-a}$$

worin A eine Zahl ist gemäß 57,5 < A < 65, bevorzugt 60 < A < 62,5 und a den Gehalt der Pfropfhülle an Acrylnitril in Gew.-% bedeutet.

Die Kautschukgrundlage und die Pfropfhülle der erfindungsgemäßen Pfropfkautschuke sind nicht isorefraktiv mit Polyvinylchlorid und die Pfropfhülle enthält kein Methylmethacrylat. Dennoch ergeben diese Pfropfkautschuke mit Polyvinylchlorid hochtransparente Formmassen mit verbesserter Zähigkeit insbesondere bei tiefen Temperaturen. Auch mit anderen Thermoplasten werden transparente Formmassen erhalten.

Ein weiterer Gegenstand der Erfindung sind deshalb thermoplastische, transparente Formmassen aus einem der oben definierten Pfropfpolymerisate und Polyvinylchlorid oder Tetraalkylbisphenol-A-Polycarbonaten mit der wiederkehrenden Struktureinheit der Formel (I)

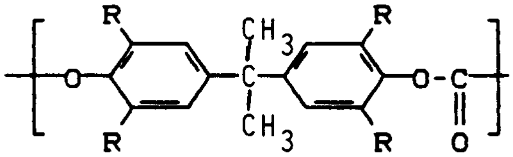

(I)

mit R = $C_1$-$C_6$-Alkyl, bevorzugt Methyl.

Bevorzugte thermoplastische Formmassen gemäß der Erfindung enthalten 1 bis 70, insbesondere 10 bis 50 Gew.-% Pfropfpolymerisate und 99 bis 30, insbesondere 50 bis 90 Gew.-% Polyvinylchlorid bzw. Tetraalkylbisphenol-A-Polycarbonat.

Die erfindungsgemäßen Pfropfkautschuke können bevorzugt durch Polymerisation von Styrol und Acrylnitril in wäßriger Emulsion in Gegenwart des Polybutadiens bei Temperaturen von 30 bis 75 °C, bevorzugt 40 bis 70 °C hergestellt werden. Die Polymerisation mit so durchgeführt werden, daß ein möglichst großer Teil der Monomere auf den Kautschuk pfropfpolymerisiert wird, d.h. chemisch gebunden wird. Vollständig ist die Pfropfpolymerisation nie. Das Ausmaß der Pfropfung läßt sich durch die Pfropfausbeute beschreiben, das Gewichtsverhältnis der tatsächlich gepfropften Monomere zu der Gesamtmenge der für die Pfropfung eingesetzten Monomere. Die Pfropfausbeute bei der Herstellung der erfindungsgemäßen Pfropfkautschuke A) muß mindestens 65 %, bevorzugt 75 % oder mehr sein. Dies wird durch Verwendung von Redox-Initiatoren erreicht, z.B. Hydroperoxiden kombiniert mit wasserlöslichen Reduktionsmitteln wie Hydrogensulfat, Formaldehydsulfoxylat, Formamidinsulfinsäure, Dithionit, Zucker (Dextrose), Amine (Tetraethylentriamin). Insbesondere eignen sich Pfropfkautschuke, die mit einem Initiator aus in Wasser schwerlöslichen organischen Hydroperoxiden (I) und Ascorbinsäure (II) hergestellt wurden. In besonders bevorzugten Herstellverfahren werden 0,4 bis 1,8 Gew.-% Hydroperoxid (I) und 0,15 bis 1,2 Gew.-% Ascorbinsäure (II), jeweils bezogen auf zu pfropfende Monomere eingesetzt, wobei das Gewichtsverhältnis (I)/(II) 0,5 bis 10, vorzugsweise 1 bis 7 beträgt.

Der als Pfropfgrundlage benutzte Butadienkautschuk ist ein Homopolymerisat, das gegebenenfalls zur Vernetzung mehrfunktionelle Monomere in Mengen $<2$ Gew.-% einpolymerisiert enthalten kann.

Das Polybutadien ist wenigstens partiell vernetzt und besitzt Gelgehalte von 20 bis 95 Gew.-%, insbesondere von 50 bis 90 Gew.-% und besteht aus Teilchen mit mittleren Durchmessern ($d_{50}$-Werte) von 50 bis 600 nm, insbesondere 50 bis 400 nm, besonders bevorzugt 50 bis 200 nm, insbesondere 60 bis 100 nm. Solche teilchenförmigen Kautschuke sind bekannt. Sie können durch Emulsionspolymerisation von Butadien hergestellt werden und liegen als Latices (Emulsionen) vor.

Erfindungsgemäß werden die Pfropfpolymerisate in wäßriger Emulsion durch Polymerisation von Styrol und Acrylnitril in Gegenwart von Kautschuk-Latex hergestellt. Dabei werden üblicherweise oberflächenaktive Hilfsmittel eingesetzt, Emulgatoren oder Dispergatoren sowie gegebenenfalls Zusätze, um bestimmte pH-Werte und Elektrolytgehalte bei der Pfropfpolymerisation einzustellen. Unter Umständen kann man die Emulsions-Polymerisation auch ohne Emulgatorzusatz durchführen, insbesondere, wenn man mit wenig Monomer im Verhältnis zum Kautschuk arbeitet, oder wenn die in der Kautschukemulsion (Latex) selbst vorliegende Emulgatormenge bereits ausreicht, um die Pfropfpolymerisation der Monomeren in der Emulsion bei genügender Emulsionsstabilität zu gewährleisten.

Besonders geeignet sind anionische Emulgatoren, vorzugsweise Alkali-Salze von Fettsäuren, Harzsäuren, disproportionierten Harzsäuren, Alkylsulfonsäuren, Arylsulfonsäuren. Sie werden in Mengen bis zu 5 Gew.-%, vorzugsweise bis zu 2,5 Gew.-%, bezogen auf die zu polymerisierenden Monomere, eingesetzt.

Geeignete Hydroperoxide sind beispielsweise Cumolhydroperoxid, tert.-Butylhydroperoxid, Wasserstoffperoxid, vorzugsweise Cumolhydroperoxid und tert.-Butylhydroperoxid, also Hydroperoxide mit großen Halbwertszeiten im Temperaturbereich unterhalb 70 °C.

Die erfindungsgemäßen Pfropfpolymerisate können bevorzugt wie folgt hergestellt werden:

Eine wäßrige Emulsion eines partiell vernetzten Butadienkautschuks wird diskontinuierlich oder kontinuierlich in wäßriger Emulsion bepfropft; bei Polymerisationstemperaturen von 30 bis 75 °C, insbesondere 40 bis 70 °C wird die Kautschukemulsion mit dem Pfropfmonomer sowie gegebenenfalls zusätzlichem Emulgator und Hydroperoxid sowie Ascorbinsäurelösungen in den oben angegebenen Mengen versetzt. Als weitere Komponente des Startersystems können katalytische Mengen Schwermetallkationen, insbesondere Fe, zugefügt werden, insbesondere wenn die Kautschuklatices größere Mengen Komplexierungsagenzien enthalten. Normalerweise werden keine Eisenionen zugesetzt, da sich Metallspuren nachteilig auf die anwendungstechnischen Eigenschaften der Produkte auswirken können. Nicht genügend wasserlösliche Hydroperoxide wie Cumolhydroperoxid können auch als wäßrige Emulsion verwendet werden, die vorteilhaft den gleichen Emulgator enthält wie der Polymerisationsansatz.

Das Hydroperoxid und das Reduktionsmittel, insbesondere Ascorbinsäure, können portionsweise oder kontinuierlich in die Pfropfpolymerisation eindosiert werden. Bevorzugt wird das Hydroperoxid anteilmäßig mit dem Kautschuklatex vorgelegt und die Pfropfmonomere, restliches Reduktionsmittel, Hydroperoxid und gegebenenfalls Emulgator mit fortschreitender Polymerisation der Pfropfmonomere separat zugefügt.

Die Mengen Hydroperoxid und Reduktionsmittel sind kritisch. Bei Überdosierung von Hydroperoxid und/oder Reduktionsmittel wird die Pfropfpolymerisation beeinträchtigt. Die Pfropfausbeute geht zurück; das Molekulargewicht des gepfropften und des freien Harzes wird geringer; Unter- oder Überschreitung der

Mengen an Hydroperoxid und Ascorbinsäure können sich außerdem empfindlich auf Monomerumsatz und Emulsionsstabilität auswirken, so daß die technische Realisierung der Pfropfpolymerisation unmöglich wird. Um das Verfahren, die Struktur der Pfropfpolymerisate und deren physikalische Eigenschaften, insbesondere in Kombination mit weiteren Thermoplasten, zu optimieren, sind bei der Pfropfpolymerisation eine Temperatur von 30 bis 75 °C und die oben angegebenen Hydroperoxid/Ascorbinsäuremengen unbedingt einzuhalten.

Die Pfropfhülle der erfindungsgemäßen Pfropfkautschukpolymerisate wird durch Pfropfung eines Gemisches aus Styrol und Acrylnitril auf die Kautschukgrundlage hergestellt. Der Acrylnitrilgehalt der Pfropfhülle liegt zwischen 0 und 30 Gew.-%, bevorzugt zwischen 0 und 25 Gew.-%, besonders bevorzugt zwischen 5 und 15 Gew.-%. Erfindungsgemäße Pfropfkautschuke, die mit Thermoplasten wie Polyvinylchlorid transparente und (kerb)schlagzähe Formmassen ergeben, werden erhalten, wenn der Kautschukgehalt des Pfropfpolymerisats in Gew.-% ist:

$$X = \frac{A - a}{100-a}$$

worin A eine empirisch ermittelte Zahl ist gemäß 57,5 < A < 65, bevorzugt 60 < A < 62,5 und a den Gehalt der Pfropfhülle an Acrylnitril in Gew.-% bedeutet.

Der Kautschukgehalt X bezieht sich dabei auf das gesamte bei der Pfropfpolymerisation erhaltene Produkt.

Im Prinzip muß der Kautschukgehalt groß sein, wenn wenig Acrylnitril vorhanden ist und klein, wenn viel Acrylnitril vorhanden ist.

Insgesamt kann der Kautschukgehalt aufgrund der Grenzen für a und A nur zwischen 39 Gew.-% und 65 Gew.-% betragen. Mit kleineren bzw. größeren Kautschukgehalten werden Formmassen mit gestörter Transparenz erhalten. Die in den erfindungsgemäßen Formmassen gegebenenfalls enthaltenen Polycarbonate enthalten wiederkehrende Struktureinheiten der Formel (I)

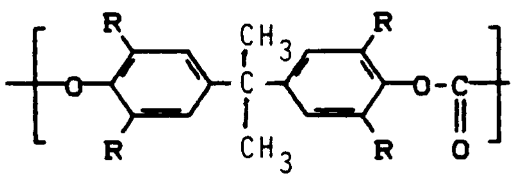

(I)

mit R = $C_1$-$C_6$-Alkyl, bevorzugt $CH_3$.

Solche Polycarbonate sind bekannt.

Die erfindungsgemäßen Pfropfpolymerisate können aus den anfallenden Emulsionen durch bekannte Fällmethoden (z.B. mit Säuren oder Salzen) oder durch Sprühtrocknung in fester Form gewonnen werden. Will man die Pfropfpolymerisate mit thermoplastischen Harzen mischen, die selbst als Emulsion vorliegen, so kann man die Pfropfpolymerisatemulsion mit der Harzemulsion mischen und gemeinsam fällen. Vor der Fällung können zur Stabilisierung phenolische Antioxidantien zugesetzt werden.

Zu Pulver aufgearbeitete Pfropfpolymerisate und pulverförmige oder als Granulat vorliegende Thermoplaste können durch Schmelzcompoundieren oder Homogenisieren gegebenenfalls unter Zusatz von Additiven wie Stabilisatoren, Weichmachern, auf üblichen Vorrichtungen gemischt werden.

Die erfindungsgemäßen Formmassen eignen sich für viele Anwendungen wo Härte, Zähigkeit auch bei tiefen Temperaturen und gleichzeitig Transparenz gefordert werden, insbesondere zur Herstellung von Profilen, Platten, Rohren oder Flaschen. Je nach Art der zugesetzten Thermoplaste unterscheiden sich die Massen in ihren Gebrauchseigenschaften, so daß man für jeden Anwendungszweck die jeweils optimalen Thermoplaste auswählen muß.

Die erfindungsgemäßen Pfropfpolymerisate ergeben nach Mischung mit bestimmten Thermoplasten Formmassen mit guter Transparenz und guten anwendungstechnischen Eigenschaften. Dabei sind einerseits die Transparenz der Formmassen trotz der Verwendung eines reinen Polybutadienkautschuks gut und andererseits trotz der speziellen Pfropfpolymerisatstruktur die mechanischen Eigenschaften verbessert (besonders gegenüber bekannten sogenannten MBS-Pfropfkautschuken). Weiterhin können die erfindungsgemäßen Pfropfpolymerisate nicht nur in Polyvinylchlorid, sondern auch in speziellen Polycarbonaten eingesetzt werden.

Die Pfropfausbeute wurde durch Fraktionierung mit entmischenden Flüssigkeiten bestimmt (vgl. dazu M. Hoffmann et al., "Polymeranalytik I und II", Georg Thieme Verlag, Stuttgart, 1977).

Die Teilchendurchmesser sind $d_{50}$-Werte und durch Ultrazentrifugenmessung ermittelt (vgl. dazu W. Scholtan et al., Kolloidz. und Z. Polymere 250 (1972)).

Beispiele

1. Dienkautschuke als Pfropfgrundlagen

1.1.

Emulsion eines partiell vernetzten, feinteiligen Polybutadiens mit einem mittleren Teilchendurchmesser von 100 nm ($d_{50}$-Wert) und einem Gelgehalt von 92 Gew.-%. Die Emulsion enthält 41 Gew.-% Polybutadien.

1.2. (zum Vergleich)

Emulsion eines partiell vernetzten feinteiligen Copolymerisats aus 70 Gew.-Teilen Butadien und 30 Gew.-Teilen Styrol mit einem mittleren Teilchendurchmesser ($d_{50}$-Wert) von 110 nm und einem Gelgehalt von 90 Gew.-%. Die Emulsion enthält 32 Gew.-% Copolymerisat.

2. Pfropfpolymerisate

2.1.

Eine Mischung aus 1912 Gew.-Teilen des Latex 1.1. und 701 Gew.-Teilen Wasser wird in einem Reaktor vorgelegt und auf 61 °C aufgeheizt. Bei dieser Temperatur werden folgende zwei Lösungen bzw. Emulsionen in nachfolgender Reihenfolge in den Reaktor eingegeben:

a)
0,70 Gew.-Teile Cumolhydroperoxid
50 Gew.-Teile Wasser

b)
0,40 Gew.-Teile Ascorbinsäure
50 Gew.-Teile Wasser

Danach werden die folgenden Mischungen innerhalb von 4 Stunden bei einer Innentemperatur von 61 °C in den Reaktor unter Rühren eindosiert:

Z1)
350 Gew.-Teile Wasser
33 Gew.-Teile Na-Salz disproportionierter Abietinsäure
25 Gew.-Teile in-Natronlauge
5,50 Gew.-Teile Cumolhydroperoxid

Z2)
554,4 Gew.-Teile Styrol
61,6 Gew.-Teile Acrylnitril

Z3)
300 Gew.-Teile Wasser
0,80 Gew.-Teile Ascorbinsäure

Anschließend wird bei 61 °C 6 Stunden lang auspolymerisiert. Es wird ein Latex mit einem Feststoffgehalt von 34 % erhalten. Nach Stabilisierung mit 1,2 Gew.-Teilen phenolischem Antioxidanz pro 100 Gew.-Teilen Pfropfpolymer wird das Pfropfpolymer mit einer Essigsäure/Magnesiumsulfat-Mischung ausgefällt, gewaschen und zu einem Pulver getrocknet.

Die Pfropfpolymerisation verlief mit einer Pfropfausbeute von 85 %. Der Acrylnitrilgehalt a = 10 % erfüllt Gleichung (1) mit dem Kautschukanteil des Pfropfproduktes X = 56 % und A = 60,4.

2.2.

Man verfährt wie in Beispiel 2.1. Es wird eine Mischung aus 2049 Gew.-Teilen des Latex 1.1. und 688 Gew.-Teilen Wasser vorgelegt. Der Zulauf Z2) setzt sich aus 33,6 Gew.-Teilen Acrylnitril und 526,4 Gew.-Teilen Styrol zusammen. Es wird ein Latex mit einem Feststoffgehalt von 35 % erhalten. Die Pfropfpolymerisation verlief mit einer Pfropfausbeute von 91 %. Der Acrylnitrilanteil a = 6 % genügt mit dem Kautschukanteil X = 60 % Gleichung 1 für A = 62,4.

2.3.

Man verfährt wie in Beispiel 2.1. Es wird eine Mischung aus 1707 Gew.-Teilen des Latex 1.1 und 1000 Gew.-Teilen Wasser vorgelegt. Der Zulauf Z2) setzt sich aus 196 Gew.-Teilen Acrylnitril und 504 Gew.-Teilen Styrol zusammen. Es wird ein Latex mit einem Feststoffgehalt von 33 % erhalten. Die Pfropfausbeute beträgt 83 Gew.-%. Der Parameter A zur Erfüllung von Gleichung (1) bei dem Acrylnitrilanteil a = 28 % und dem Kautschukanteil X = 50 % beträgt A = 64.

2.4. Vergleichspfropfpolymerisat

Eine Mischung aus 2625 Gew.-Teilen des Latex 1.2. und 138 Gew.-Teilen Wasser werden in einem Reaktor vorgelegt und auf 61 °C aufgeheizt. Bei dieser Temperatur werden folgende zwei Lösungen bzw. Emulsionen in nachfolgender Reihenfolge in den Reaktor eingegeben:

a)
1,0 Gew.-Teile Cumolhydroperoxid
90 Gew.-Teile Wasser

b)
0,1 Gew.-Teile Ascorbinsäure
50 Gew.-Teile Wasser

Danach werden nachstehende Zuläufe Z1) und Z2) innerhalb von 4 Stunden, Z3) innerhalb 6 Stunden bei einer Innentemperatur von 61 °C in den Reaktor unter Rühren eindosiert:

Z1)
400 Gew.-Teile Wasser
30 Gew.-Teile Na-Salz disproportionierter Abietinsäure
24 Gew.-Teile 4n Natronlauge
4 Gew.-Teile Cumolhydroperoxid

Z2)
180 Gew.-Teile Styrol
180 Gew.-Teile Methylmethacrylat

Z3)
300 Gew.-Teile Wasser
2,0 Gew.-Teile Ascorbinsäure

Anschließend wird bei 61 °C 6 Stunden lang auspolymerisiert. Es wird ein Latex mit einem Feststoffgehalt von 30 % erhalten. Nach Stabilisierung mit 1,2 Gew.-Teilen phenolischem Antioxidanz pro 1000 Gew.-Teilen Pfropfpolymer wird das Pfropfpolymer durch Koagulation mit einer Essigsäure/Magnesiumsulfat-Mischung isoliert, gewaschen und zu einem Pulver getrocknet.

2.5. Vergleichspfropfpolymerisat

Eine Mischung aus 4870 Gew.-Teilen des Latex 1.1. und 970 Gew.-Teilen Wasser werden in einem Reaktor vorgelegt und auf 61 °C aufgeheizt. Bei dieser Temperatur werden folgende zwei Lösungen bzw. Emulsionen in nachfolgender Reihenfolge in den Reaktor eingegeben:

a)
1,5 Gew.-Teile Cumolhydroperoxid
100 Gew.-Teile Wasser

b)
0,80 Gew.-Teile Ascorbinsäure
100 Gew.-Teile Wasser

Danach werden nachstehende Zuläufe innerhalb von 4 Stunden bei einer Innentemperatur von 61 °C in den Reaktor unter Rühren eindosiert:

Z1)
450 Gew.-Teile Wasser
50 Gew.Teile Na-Salz disproportionierter Abietinsäure
38 Gew.-Teile 1n-Natronlauge
7 Gew.-Teile Cumolhydroperoxid

Z2)
774 Gew.-Teile Styrol
86 Gew.-Teile Acrylnitril

Z3)
550 Gew.-Teile Wasser
1,0 Gew.-Teile Ascorbinsäure

Anschließend wird bei 61 °C 6 Stunden lang auspolymerisiert. Es wird ein Latex mit einem Feststoffgehalt von 36 % erhalten. Nach Stabilisierung mit 1,2 Gew.-Teilen phenolischem Antioxidanz pro 1000 Gew.-Teilen Pfropfpolymer wird das Pfropfpolymer durch Koagulation mit einer Essigsäure/Magnesiumsulfat-Mischung isoliert, gewaschen und zu einem Pulver getrocknet.

Die SAN-Pfropfung verlief mit einer Ausbeute von 92 Gew.-%. Bei einem Acrylnitrilanteil a = 10 % und einem Kautschukanteil X = 70 % liegt der Parameter A aus Gleichung 1 mit A = 75 außerhalb des/deren Gültigkeitsbereiches

2.6. Vergleichspfropfpolymerisat

In einem Reaktor werde vorgelegt:

1 873 Gew.-Teile der Emulsion 1.1. und 657 Gew.-Teile Wasser. Nach Aufheizen auf 65° C wird eine Starterlösung aus 3 Gew.-Teilen Kaliumperoxodisulfat in 50 Gew.-Teilen Wasser eingespeist. Anschließend werden folgende zwei Lösungen innerhalb von 6 Stunden bei 65°C in den Reaktor eingespeist:

1.

| | |
|---|---|
| Styrol | 567 Gew.-Teile |
| Acrylnitril | 65 Gew.-Teile |

2.

| | |
|---|---|
| Wasser | 1000 Gew.-Teile |
| Na-Salz der disproportionierten Abietinsäure | 13 Gew.-Teile |
| 1n-Natronlauge | 10 Gew.-Teile |

Im Anschluß daran wird durch Nachrühren bei 65°C innerhalb von 4 Stunden auspolymerisiert. Der Feststoffgehalt des Latex beträgt 33,5 %. Die Stabilisierung und Isolierung des Pfropfpolymerisats erfolgt analog Vorschrift 2.1. Die Pfropfung verlief mit einer Pfropfausbeute von 54 % und liegt damit außerhalb der Erfindung.

3.1. PVC

Polyvinylchlorid mit einem K-Wert von 70

3.2. Tetramethylbisphenol-A-Polycarbonat der relativen Lösungsviskosität 1,30 (gemessen bei 25°C in $CH_2Cl_2$ bei 0,5 g pro 100 ml Lösung)

4. Herstellung und Prüfung der Formmassen

4.1. Zur Herstellung der PVC-Formmassen werden die in nachstehender Tabelle 1) aufgeführten Komponenten in den angegebenen Mengen vermischt; als Stabilisator- und Gleitmittelzusatz werden 1,5 Gew.-% Octylzinnmercaptid und 0,3 Gew.-% Esterwachs zugesetzt. Die Formmassen werden auf einem Mischwalzwerk (bei 180°C) homogenisiert und bei 190°C zu Prüfkörpern verarbeitet.

Tabelle 1

| Zusammensetzung der PVC-Formmassen (in Gew.-Teilen) | | | | | | | |
|---|---|---|---|---|---|---|---|
| Beispiel Nr. | Anteile der Komponenten | | | | | | |
| | 2.1. | 2.2. | 2.3. | 2.4. | 2.5. | 2.6. | 3.1 |
| 4.1 | 10 | | | | | | 90 |
| 4.2 | | 10 | | | | | 90 |
| 4.3 | | | 10 | | | | 90 |
| 4.4 (Vergleich) | | | | 10 | | | 90 |
| 4.5 (Vergleich) | | | | | 10 | | 90 |
| 4.6 (Vergleich) | | | | | | 10 | 90 |

Prüfung der Formmassen:

Die Prüfkörper wurden mit folgenden Methoden untersucht:

| | |
|---|---|
| Kerbschlagzähigkeit: | DIN 53 453 |
| Wärmeformbeständigkeit: | ISO 75, Methode A |
| Lichttransmission bzw. -trübung: (an 4 mm-Platten) | DIN 5036 |

Die Prüfergebnisse sind in Tabelle 2 zusammengestellt. Man erkennt, daß die erfindungsgemäßen Formmassen eine verbesserte Tieftemperaturkerbschlagzähigkeit und hohe Transparenz aufweisen, während Formmassen, die nicht erfindungsgemäße Pfropfpolymerisate enthalten, entweder eine hohe Trübung oder geringe Kerbschlagzähigkeit bei -20 °C besitzen.

Tabelle 2: Prüfung der Formmassen (Zusammensetzung siehe Tabelle 1)

| Beispiel Nr. | Kerbschlagzähigkeit bei 25°C KJ/m² | bei -20°C KJ/m² | Wärmeformbeständigkeit HDTA °C | Transmission % | Trübung % |
|---|---|---|---|---|---|
| 4.1 | 16 | 7 | 73 | 82 | 8 |
| 4.2 | 22 | 8 | 71 | 80 | 10 |
| 4.3 | 13 | 7 | 73 | 77 | 8 |
| 4.4 (Vergleich) | 14 | 4 | 72 | 80 | 7 |
| 4.5 (Vergleich) | 24 | 8 | 71 | 64 | 35 |
| 4.6 (Vergleich) | - | - | - | nicht meßbar | |

-: wegen nicht ausreichender Transparenz der Formkörper nicht bestimmt

4.2.

Zur Herstellung der Tetramethylbisphenol-A-polycarbonat-Formmassen werden die Pfropfkautschukkomponenten 2.6 und 2.1 mit dem Polycarbonat 3.2 bei 320 °C vermischt und zu Prüfkörpern verarbeitet.

Tabelle 3

| Zusammensetzung der PC-Formmassen (in Gew.-Tl.) | | | |
|---|---|---|---|
| Beispiel Nr. | Anteile der Komponenten | | |
| | 2.1 | 2.6 | 3.2 |
| 4.7 | 10 | | 90 |
| 4.8 | | 10 | 90 |

Die Prüfung der resultierenden Formkörper erfolgte visuell: (siehe Tabelle 4)

Tabelle 4

| Aussehen der Mischungen 4.7/4.8 | |
|---|---|
| Beispiel Nr. | Transparenzbeurteilung |
| 4.7 | + + |
| 4.8 | + - |
| + + = Transparent<br>+ - = gestörte Transparenz (Trübung) | |

## Patentansprüche

**1.** Pfropfpolymerisate auf einem teilchenförmigen, wenigstens partiell vernetzten Dienkautschuk (Pfropfgrundlage) und einem in Gegenwart des Dienkautschuks polymerisierten Styrol/Acrylnitril-Gemisch, worin

1. die mittleren Durchmesser ($d_{50}$-Werte) der Dienkautschukteilchen 50 bis 600 nm betragen,
2. der Dienkautschuk Polybutadien ist, das bis zu 2 Gew.-% eines mehrfunktionellen vernetzenden Monomers einpolymerisiert enthalten kann,
3. das Styrol/Acrylnitrilgemisch 30 bis 0 Gew.-% Acrylnitril enthält,
4. die Pfropfausbeute der Pfropfpolymerisation mindestens 65 % ist,
5. der Gesamtkautschukgehalt X des Pfropfpolymerisats in Gew.-% entspricht

$$X = \frac{A - a}{100 - a}$$

worin A eine Zahl ist gemäß $57{,}5 < A < 65$ und a den Gehalt der Pfropfhülle an Acrylnitril (in Gew.-%) bedeutet.

**2.** Pfropfpolymerisat gemäß Anspruch 1, in dem das Styrol/Acrylnitril-Gemisch (3) 5 bis 15 Gew.-% Acrylnitril enthält.

**3.** Thermoplastische, transparente Formmassen aus einem Pfropfpolymerisat gemäß Anspruch 1 und Polyvinylchlorid oder Tetraalkylbisphenol-A-Polycarbonat.

**4.** Thermoplastische Formmasse gemäß Anspruch 3 enthaltend 1 bis 70 Gew.-% des Pfropfpolymerisats gemäß Anspruch 1.

**5.** Verwendung der Pfropfpolymerisate gemäß Anspruch 1 oder 2 als Additiv zur Verbesserung der physikalischen Eigenschaften von Polyvinylchlorid und von Tetraalkylbisphenol-A-Polycarbonat.

## Claims

**1.** Graft polymers of a particulate, at least partially cross-linked diene rubber (graft basis) and a styrene/acrylonitrile mixture polymerised in the presence of the diene rubber, wherein

1. the average diameters ($d_{50}$ values) of the diene rubber particles are from 50 to 600 nm,
2. the diene rubber is polybutadiene which may contain up to 2% by weight of a polyfunctional, cross-linking monomer incorporated by polymerisation,
3. the styrene/acrylonitrile mixture contains from 30 to 0% by weight of acrylonitrile,
4. the graft yield of the graft polymerisation is at least 65%,
5. the total rubber content X of the graft polymer in percent by weight corresponds to

$$X = \frac{A - a}{100 - a}$$

wherein A is a number amounting to 57.5 < A < 65 and a denotes the amount of acrylonitrile (in % by weight) in the graft shell.

**2.** A graft polymer according to Claim 1 in which the styrene/acrylonitrile mixture (3) contains from 5 to 15% by weight of acrylonitrile.

**3.** Thermoplastic, transparent moulding compounds of a graft polymer according to Claim 1 and polyvinyl chloride or tetraalkyl bisphenol-A-polycarbonate.

**4.** Thermoplastic moulding compound according to Claim 3 containing from 1 to 70% by weight of the graft polymer according to Claim 1.

**5.** Use of the graft polymers according to Claim 1 or 2 as additive for improving the physical properties of polyvinyl chloride and of tetraalkyl bisphenol-A-polycarbonate.

## Revendications

**1.** Polymères greffés constitués d'un caoutchouc diénique en particules au moins partiellement réticulé (substrat de greffage) et d'un mélange styrène/acrylonitrile polymérisé en présence du caoutchouc diénique, dans lesquels

1. les diamètres moyens (valeurs $d_{50}$) des particules de caoutchouc diénique vont de 50 à 600 nm,
2. le caoutchouc diénique est un polybutadiène qui peut contenir jusqu'à 2 % en poids d'un monomère réticulé polyfonctionnel incorporé par polymérisation,
3. le mélange styrène/acrylonitrile contient 30 à 0 % en poids d'acrylonitrile,
4. le rendement de greffage de la polymérisation par greffage est d'au moins 65 %,
5. la teneur totale X en caoutchouc du polymère greffé correspond, en pour cent en poids, à l'équation

$$X = \frac{A - a}{100 - a}$$

dans laquelle A est un nombre supérieur à 57,5 et inférieur à 65 et a désigne la teneur en acrylonitrile (en % en poids) de l'enveloppe de greffage.

**2.** Polymère greffé suivant la revendication 1, dans lequel le mélange styrène/acrylonitrile (3) contient 5 à 15 % en poids d'acrylonitrile.

**3.** Mélanges à mouler thermoplastiques transparents, constitués d'un polymère greffé suivant la revendication 1 et d'un polychlorure de vinyle ou d'un polycarbonate de tétraalkylbisphénol A.

4. Mélanges à mouler thermoplastiques suivant la revendication 3, contenant 1 à 70 % en poids du polymère greffé suivant la revendication 1.

5. Utilisation des polymères greffés suivant la revendication 1 ou 2 comme additif pour améliorer les propriétés physiques d'un polychlorure de vinyle et d'un polycarbonate de tétraalkylbisphénol A.